# EUROPEAN PATENT APPLICATION

(11) **EP 0 554 921 A2**
(43) Date of publication of application: **11.08.1993**
(21) Application number: 93105931.5
(22) Date of filing: 22.03.1989
(51) Int. Cl.: G03B 17/30

(54) **Film cassette**

(30) Priority: 25.03.1988 US 173396
(62) Divisional of application: 89105141.9
(71) Applicant: EASTMAN KODAK COMPANY, Rochester, New York 14650-2201 (US)
(72) Inventor: Fraser,Mark David,c/o EASTMAN KODAK CO., Rochester, New York 14650-2201 (US); Robertson,Jeffrey Charles,c/o EASTMAN KODAK CO., Rochester, New York 14650-2201 (US)
(74) Representative: Blickle, K. Werner, Dipl.-Ing.

(57) **Abstract**

In a film cassette (1), a film spool (5) is rotatable independently of a pair of coaxially spaced disks (51, 53). The two disks (51, 53) have respective annular circumferential lips (59, 61) which prevent the outermost leader convolution (47) of a film roll (37) wound on the spool core (23) from clock-springing into contact with the cassette shell (3). When the spool core (23) is initially rotated, the disks (51, 53) can remain substantially stationary and the film roll (37), since its inner end (39) is secured to the spool core, tends to expand radially to ensure a non-slipping relation between the outermost leader convolution (47) and the circumferential lips (59, 61). Then, rotation of the spool core (23) must rotate the disks (51, 53) and stationary internal spreaders (65, 67) will deflect successive portions (59', 61') of the lips (59, 61) to an axial dimension exceeding the film width, thereby allowing corresponding portions of the outermost leader convolution (47) to exit from the radial confinement of the lips. Stationary internal guides (73, 75) direct the freed forward end (45) of the outermost leader convolution (47) to the cassette opening (25). Sufficient film thrust is provided by the spool core (23) as it is rotated, to thread the film leader (43) along a predetermined path from the cassette opening (25), to the outside of the cassette shell (3).

## Description

The invention relates generally to the field of photography, and particularly to a film cassette containing roll film.

In conventional 35mm film manufacturers' cassettes, such as manufactured by Eastman Kodak Co. and Fuji Photo Film Co. Ltd., the filmstrip is wound on a flanged spool which is rotatably supported within a cylindrical shell. A leading end section of the filmstrip approximately 2 1/3 inches long, commonly referred to as a "film leader", protrudes from a light-trapped slit or mouth of the cassette shell. One end of the spool has a short axial extension which projects from the shell, enabling the spool to be turned by hand. If the spool is initially rotated in an unwinding direction, the film roll inside the shell will tend to expand radially since the inner end of the filmstrip is attached to the spool, and the fogged leader section protruding from the slit will remain stationary. The film roll can expand radially until a non-slipping relation is established between its outermost convolution and the inner curved wall of the shell. Once this non-slipping relation exists, there is a binding effect between the film roll and the shell which prevents further rotation of the spool in the unwinding direction. Thus, rotation of the spool in the unwinding direction cannot serve to advance the filmstrip out of the shell, and it is necessary in the typical 35mm still camera to engage the protruding leader section to draw the filmstrip out of the shell.

A 35mm film cassette has been proposed which, unlike conventional film cassettes, can be operated to automatically advance the filmstrip out of the cassette shell by rotating the film spool in the unwinding direction. The film leader normally does not protrude from the cassette shell. Specifically, in prior art U.S. Pat. No. 4,423,943, granted January 3, 1984, there is disclosed a film cassette wherein the outermost convolution of the film roll wound on the film spool is radially constrained by respective circumferential lips of two axially spaced flanges of the spool to prevent the outermost convolution from contacting an inner curved wall of the cassette shell. The trailing end of the filmstrip is secured to the film spool, and the leading end of the filmstrip is slightly tapered along one longitudinal edge purportedly to allow it to extend from between the circumferential lips and rest against the shell wall. During initial unwinding rotation of the film spool, the leading end of the filmstrip is advanced along the shell wall until it reaches an entry to a film passageway in the cassette shell. Then, it is advanced into and through the film passageway to the outside of the cassette shell. The passageway has a width which is slightly less than the width of the filmstrip, thus resulting in the filmstrip being transversely bowed as it is uncoiled from the film spool, and thereby facilitating movement of the longitudinal film edges under the circumferential lips of the respective flanges. However, transverse bowing of the filmstrip to move its longitudinal edges under the circumferential lips results in increased friction between the filmstrip and the film spool which will impede advance of the filmstrip from the cassette shell and may damage the filmstrip.

The invention relates to a film cassette wherein a film spool when rotated in the unwinding direction automatically advances a film leader out of the cassette shell. However, in contra-distinction to prior art U.S. Pat. No. 4,423,943, this is done without possibly damaging the filmstrip.

According to a preferred embodiment of the invention, a film cassette is defined by claim 1.
FIG. 1 is an exploded perspective view of an improved film cassette according to a preferred embodiment of the invention;
FIG. 2 is an elevation view in cross-section of the improved film cassette; and
FIG. 3 is an end view in cross-section of the improved film cassette.

The invention is disclosed as being embodied preferably in a 35mm film cassette. Because the features of this type of film cassette are generally well known, the description which follows is directed in particular to elements forming part of or cooperating directly with the disclosed embodiment. It is to be understood, however, that other elements not specifically shown or described may take various forms known to persons of ordinary skill in the art.

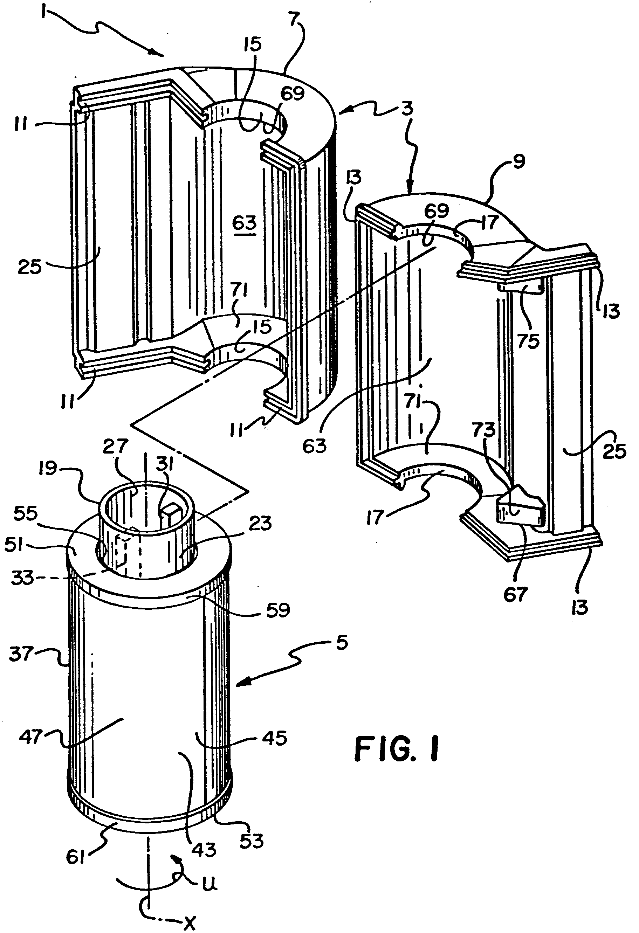

Referring now to the drawings, FIGS. 1-3 depict an improved 35mm film cassette 1 comprising a light-tight cassette shell 3 and a film spool 5 rotatable about an axis X within the cassette shell. The cassette shell 3 consists of two shell halves 7 and 9 which are mated along respective grooved and stepped edge portions 11 and 13. The mated halves 7 and 9 define upper and lower aligned openings 15 and 17 for relatively longer and shorter opposite end extensions 19 and 21 of a spool core or hub 23. Also, they define a light-trapped film passage slit or mouth 25. The light-trapping means for preventing ambient light from entering the film passage slit 25, although not shown, may be a known black velvet or plush material which lines the interior of the slit.

The spool core 23 as shown in FIGS. 1-3 includes relatively longer and shorter coaxial holes 27 and 29 opening at the respective longer and shorter opposite end extensions 19 and 21 of the spool core. A pair of spaced keying ribs 31 and 33 integrally formed with the spool core 23 are located within the longer coaxial hole 27, and a single keying rib 35 similarly formed with the spool core is located within the shorter coaxial hole 29. The several keying ribs 31, 33, and 35 according to custom may be engaged to rotate the film spool in an unwinding direction indicated by the arrow U in FIG. 1, or to rotate the spool in winding direction opposite to the unwinding direction.

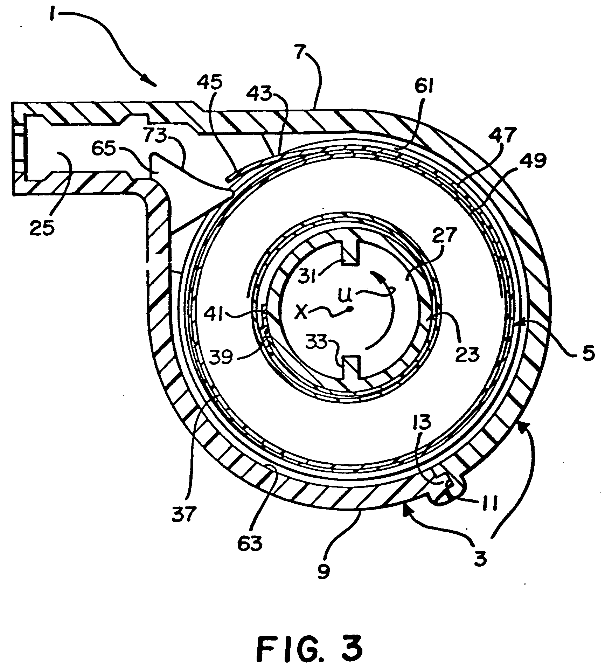

A roll 37 of convoluted 35mm film having a substantially uniform width is wound about the spool core 23. As indicated in FIG. 3, the film roll 37 has an inner or trailing end 39 attached to the spool core 23 by a suitable piece of adhesive tape 41 and a leader section 43. The leader section 43 has a leading or forward end 45 and comprises 2-3 convolutions of the film roll 37. One of these convolutions is the outermost convolution 47 and another of them is the next inward succeeding convolution 49.

A pair of flexible identical flanges or disks 51 and 53 are coaxially spaced along the spool core 23 to lightly rest against the opposite flat ends of the film roll 37. The two disks 51 and 53 cover the opposite ends of the film roll 37 and they have respective central holes 55 and 57 through which the spool core 23 longitudinally extends in loose relation to permit rotation of the spool core relative to the disks. Although not shown, it is possible for the spool core 23 to include integral radially extending flanges disposed between the opposite ends of the film roll 37 and the respective disks 51 and 53. The two disks 51 and 53 have respective continuous circumferential annular lips 59 and 61 which extend at right angles to the peripheries of the disks to radially confine the outermost convolution 47 of the film roll 37, thereby to prevent the film roll from radially expanding or clock-springing into contact with an inner curved wall 63 of the cassette shell 3. As shown in FIG. 1, the leading end 45 of the film roll 37 is similarly confined by the circumferential lips 59 and 61. However, the leading end 45 may be tapered to allow it to slightly protrude from between the two lips 59 and 61.

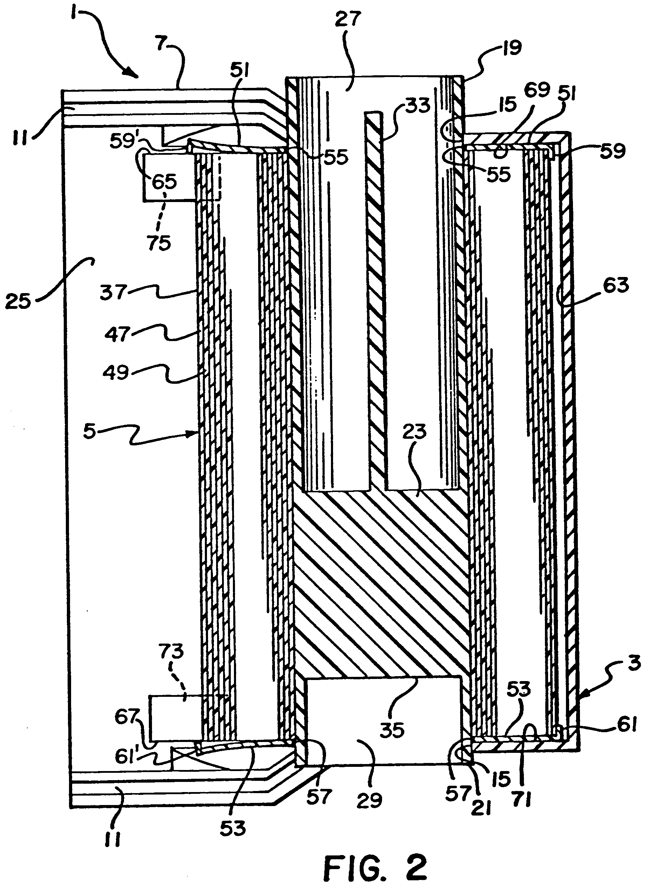

A pair of rigid identical spreader surfaces 65 and 67 are fixed to the cassette half 9 at separate locations inwardly of the film passage slit 25 as shown in FIGS. 2 and 3. The two spreader surfaces 65 and 67 deflect opposite limited portions 59' and 61' of the respective lips 59 and 61 (together with the disks 51 and 53) axially away from each other to an axial dimension slightly exceeding the film width. See FIG. 2. In essence, the deflected portions 59' and 61' of the two lips 59 and 61 are axially spaced sufficiently to prevent those portions of the lips from radially confining corresponding portions of the outermost convolution 47 of the film roll 37. As indicated in FIGS. 1 and 2, the remaining portions of the two lips 59 and 61 are maintained in place via inner semi-circular flat support surfaces 69 and 71 of the cassette shell 3, which abut the respective disks 51 and 53 except in the general vicinity of the two spreader surfaces 65 and 67. Thus, the remaining portions of the two lips 59 and 61 must continue to radially confine the outermost convolution 47.

When the spool core 23 is initially rotated in the unwinding direction U, the two disks 51 and 53 can remain substantially stationary and the film roll 37, since its inner end 39 is attached to the spool core, tends to expand radially to ensure a firm non-slipping relation between the outermost convolution 47 of the film roll and the circumferential lips 59 and 61 of the disks. Then, rotation of the spool core 23 in the same direction will similarly rotate the two disks 51 and 53. As a result, the two spreader surfaces 65 and 67 will deflect successive portions of the circumferential lips 59 and 61 axially away from each other as the respective portions are rotated past the spreader surfaces. The deflected portions 59' and 61' of the two lips 59 and 61 are returned to their original non-deflected condition by means of the semi-circular flat support surfaces 69 and 71 bearing against the respective disks 51 and 53 at locations remote from the spreader surfaces 65 and 67. As can be appreciated from FIG. 3, the leading end 45 of the film roll 37 will be freed from the radial confinement of the two lips 59 and 61 in the general vicinity of the spreader surfaces 65 and 67 and it will be advanced against a pair of rigid identical stripper-guide surfaces 73 and 75 integrally formed with the respective spreader surfaces. The two stripper-guide surfaces 73 and 75 operate to direct the leading end 45 into the film passage slit 25, thereby allowing succeeding portions of the outermost convolution 47 to be freed from corresponding portions of the two lips 59 and 61 as those portions of the lips are deflected by the two spreader surfaces 65 and 67. Consequently, continued rotation of the spool core 23 will thrust the leader section 43 of the film roll 37 from the cassette shell 3.

The invention has been described with reference to a preferred embodiment. However, it will be appreciated that variations and modifications can be effected within the ordinary skill in the art without departing from the scope of the invention. For example, the leading end 45 of the film roll 37 could initially be located within the film passage slit 25 rather than be radially confined by the circumferential lips 59 and 61 of the two disks 51 and 53.

## Claims

1. A film cassette (1) comprising a cassette shell (3) and a film roll (37) wherein an outermost convolution (47) of the film roll (37) coiled about a spool core (23) is radially constrained by respective annular lips (59, 61) of a pair of disks (51, 53) on said spool core to prevent said outermost convolution from contacting an interior wall (63) of the cassette shell (3), an inner end (39) of said film roll (37) is secured to said spool core (23), and said spool core (23) and said disks (51, 53) are rotatable in an unwinding direction (U) to automatically advance a leader section (43) of the film roll (37) through a film passage slit (25) to the exterior of said cassette shell (3), characterized in that said spool core (23) is rotatable independently of said disks (51, 53) to allow initial rotation of the spool core relative to the disks in the unwinding direction (U) to urge said film roll (37) to expand radially until there is achieved a non-slipping relation between said outermost convolution (47) and said annular lips (59, 61) to thus cause the disks to be rotated with the spool core when the spool core when the spool core is further rotated in the unwinding direction.

2. The film cassette (1) as recited in claim 1 wherein said annular lips (59, 61) are capable of being deflected sufficiently to free the outermost convolution (47) of the film roll (37) from the radial constraint of the lips.

3. The film cassette (1) as recited in claim 2 wherein respective spreaders (65, 67) are positioned to directly deflect successive portions (59', 61') of annular lips (59, 61) to free corresponding portions of the outermost convolution (47) of the film roll (37) as those portions of the lips are rotated past the spreaders, when the disks (51, 53) are rotated with the spool core (23) in the unwinding direction (U).

4. The film cassette (1) as recited in claim 3 wherein said spreaders (65, 67) continuously contact respective portions (59', 61') of the annular lips (59, 61) to always deflect one portion of each lip.

5. The film cassette (1) as recited in claim 3 wherein respective supports (69, 71) are positioned to abut the disks (51, 53) to prevent said lips (59, 61) from being deflected except in the general vicinity of said spreaders (65, 67) to thus cause the lips to continue to radially constrain the outermost convolution (47) of the film roll (37) at locations remote from the spreaders.

6. The film cassette (1) as recited in claim 3 wherein respective guides (73, 75) are positioned adjacent said spreaders (65, 67) to guide each freed portion of the outermost convolution (47) of the film roll (37) into the film passage slit (25).
